Europäisches Patentamt

European Patent Office

Office européen des brevets

(11) Publication number: **0 334 568**
**A2**

# EUROPEAN PATENT APPLICATION

(21) Application number: **89302701.1**

(51) Int. Cl.⁴ **A21D 13/00**

(22) Date of filing: **20.03.89**

(30) Priority: **21.03.88 GB 8806703**

(43) Date of publication of application:
**27.09.89 Bulletin 89/39**

(84) Designated Contracting States:
**AT BE CH DE ES FR GB GR IT LI NL SE**

(71) Applicant: **UNILEVER PLC**
**Unilever House Blackfriars P.O. Box 68**
**London EC4P 4BQ(GB)**

(84) **GB**

Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(72) Inventor: **Barnes, Douglas James**
**9 Stevenson Court Eaton Socon St Neots**
**Huntingdon**
**Cambridgeshire(GB)**
Inventor: **Yates, Deborah Janes**
**27 Manor Road**
**Toddington Bedfordshire LU5 6AH(GB)**
Inventor: **Willey, Charmaine Victoria**
**72 Abingdon Park Crescent**
**Northampton NN3 3AL(GB)**

(74) Representative: **Tate, Rodney Vevers et al**
**UNILEVER PLC Patents Division P.O. Box 68**
**Unilever House**
**London EC4P 4BQ(GB)**

(54) **Food product and process.**

(57) Method for preparing a food product comprising the steps of subjecting a piece of dough to a treatment such that an outer crust is formed on only part of the piece and applying a filling on to the piece of dough such that the filling is in contact with at least part of the outer crust area but substantially not in contact with the outer non-crust area of the piece. Preferably the food product is a sandwich type food product.

## FOOD PRODUCT AND PROCESS

The present invention relates to a food product and a process for its preparation. In particular, this invention relates to snack-type products comprising a piece of dough and a filling applied to said piece. Examples of these dough products are pizzas, filled sandwiches etc.

One of the problems in the manufacture and storage of filled dough products is that moisture tends to migrate from the filling into the piece of dough, resulting in a soggy, unsatisfactory product.

In the past, several attempts have been made to prevent the occurrence of moisture migration into the dough pieces by applying a coating layer between the filling and the dough.

It is an object of the present invention to provide a food product comprising a piece of dough and a filling with an outer, non crust surface which has an interesting open porous texture upon consumption and an attractive open bready appearance, and which does not suffer from the above-mentioned sogginess problem.

Accordingly, the present invention provides a process for the preparation of a food product comprising the steps of subjecting a piece of dough to treatment such that an outer crust is formed on only part of the piece, and applying a filling to the piece of dough such that the filling is in contact with at least part of the outer crust area but substantially not in contact with an outer non-crust area of the piece, i.e. that part of the surface of the dough which has an open, porous texture and appearance.

In a preferred process according to the invention the piece of dough is treated so as to form an outer crust, the dough is then is divided into at least two parts, and the filling is applied onto the outer crust area of at least one of these parts. Alternatively, after the piece of dough has been treated to form an outer crust, part of the outer crusty surface is removed, to provide a non-crust area, e.g. by scraping or cutting to a depth where the dough has an open porous (i.e. non-crust) texture, and then applying a filling to at least part of the crust area which has not been so removed.

In another embodiment of the process of the invention, a piece of dough is treated whilst under constraint over at least part of its surface so as to inhibit the formation of an outer crust over that part of the surface whilst an outer crust develops over the remaining surface, and then applying a filling to at least part of the surface where the outer crust was developed.

The dough to be used in a process according to the invention can be any edible dough material, preferably the dough material is an expandable material for instance a starch based dough such as a flour paste, batter, mashed potato, cake dough, scotch pancake batter, pastry dough, pie dough etc. Preferably, the dough comprises leavening agents or is aerated previously to provide an aerated product; most preferred is the use of a bread-type dough. Use of this facilitates the development of an attractive open texture of the non-crust areas of the final product. When the dough pieces are produced under constraint it may be preferable to increase the amount of leavening agent, e.g. yeast, or water in the dough to facilitate the development of outer crust and non-crust areas on its surface.

The shape of the piece of dough prior to crust formation is preferably such that the treated piece is easily divisible into at least two parts, or can be otherwise treated to form the crust and non-crust areas. Suitable dough shapes for manufacture of the dough product include, for instance, scotch pancakes, crescents, muffins, buns, etc. Advantageous is the use of a sheet of dough, which provides level outer crust areas which allow the application of a viscous filling without the occurrence of substantial dripping.

The treated pieces of dough can be stored before further processing by sealing them quickly in moisture proof bags and subsequently freezing them. The dough pieces on defrosting after 14 days are of sufficient quality to be further processed. Such a technique is useful, for example to build up a stock of dough pieces at manufacturing plant, or to transport the dough pieces elsewhere for further processing. The dough pieces become less flexible after freezing and defrosting, and therefore if the dough pieces are to be sliced during further processing it may be advantageous to slice the dough pieces before freezing.

The treatment of the piece of dough such that an outer crust is developed is preferably a heat treatment such as frying, baking etc. Other techniques, such as microwave setting and surface drying, could also be used for forming a crust. Most preferred is the use of an at least partial baking treatment for developing an outer crust.

Any division of the treated pieces of dough is preferably such that each part has an outer surface which is partly constituted by a crust area and partly constituted by a non-crust area, both types of surface areas being a substantial part of the outer surface of each part. A particularly useful method of dividing the piece of dough is the lengthwise division into at least two parts.

If this method is used for dividing a slice of dough into two parts, possibly said two parts will be generally identical, each having one flat, non-crust area, including a flat side.

In dividing a piece of dough into at least two parts it is also possible to remove a relatively thin part of the piece, for instance by shaving away the upper crust part of a dough slice. This will generally result in a dough piece for further processing comprising a crust part and a non-crust part, and a number of crust particulates which may be discarded.

In processes where the dough is treated under some constraint to form the crust and non-crust areas, it is preferable to use two parallel constraint surfaces with the piece of dough sandwiched between them. The application of heat to the lower supporting surface and the tendency of gas bubbles produced by the yeast in the dough to rise, causes a crust surface to be formed on the lower surface of the dough, with a softer more open porous texture of the upper surface of the dough in contact with the other relatively cool constraining surface. .

The filling can be composed of any food material conventionally used for filling dough products such as, for instance, cheese, meat, confectionary fillings, sauces, pizza fillings, vegetable pieces and other meal components. Preferably, the filling is a moist filling such as, for instance, a bechamel sauce or a pizza filling.

A particularly interesting aspect of a process of the invention is the possibility of preparing a sandwich-type food product. Usually, sandwiches are constituted by two slices of bread having an edible filling in between. Sandwiches are usually either directly eaten or consumed after a heat-treatment, e.g. toasting.

A sandwich-type food product is prepared according to the invention by combining two parts of treated dough and applying a filling between these two parts, wherein the filling is in contact with the crust outer area of the two parts and substantially not in contact with the non-crust outer area of the parts. A convenient way of preparing such a sandwich, which has the additional advantage that no waste material is generated, involves the parbaking of a slice of dough, preferably bread dough, lengthwise dividing said slice into two substantially identical thinner slices, applying a filling to the crust flat side of one of said slices and combining the second slice with said first slice in an orientation such that the crust flat side of the second slice comes into contact with said filling, thus forming a sandwich.

Such sandwiches can advantageously be prepared for consumption in a toaster, giving a non-soggy inside and a non-crusted, open, interesting bready texture on the outside of the product.

The invention will be further illustrated by the following schematic cross-sectional figures and examples.

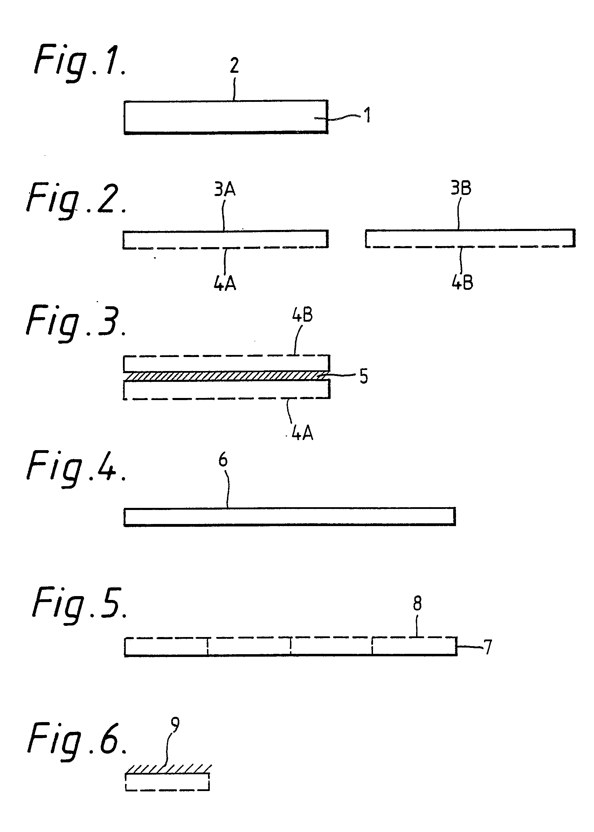

Fig. 1 shows a slice of bread dough 1 after parbaking, having a crust 2 on its entire outer surface. Fig. 2 shows the two slices resulting after lengthwise division of the slice of Fig. 1, each slice having an outer crust area 3A and 3B and an outer non-crust area 4A and 4B. Fig. 3 shows a sandwich which is prepared by applying a filling 5 to the crust side of one piece of treated dough and contacting the crust side 3B of a second piece of treated dough with said filling.

Figure 4 shows a baked slice of bread dough, having a crust 6 on its entire outer surface. Figure 5 shows the slice having shaving away a thin top layer and cutting the slice in parts, each small slice comprises an outer crust area 7 and an outer non-crust area 8. Figure 6 shows a pizza which is prepared by applying a filling 9 to the crust side of one of the small slices.

Example I

Pizza Product

A pizza dough product was prepared by mixing

| Flour | 750g |
|---|---|
| Groundnut oil | 51g |
| Whole egg powder | 34g |
| Yeast | 25g |
| Water | 328g |
| Salt | 11g |

The dough obtained was rolled out into circular sheets having a thickness of 0.4cm and a diameter of 15cm, and subsequently proofed for 45 minutes at a temperature of 30|C. The product was parbaked in a bakery oven for 7 minutes at a temperature of 220|C. The resulting product was substantially flat and had a thickness of 1.2cm. The product was divided into two slices having a thickness of 0.6cm. A pizza filling was applied to the flat crust side of each slice by first applying a tomato sauce, followed by the application of vegetable pieces and cheese particles. The two pizzas where each wrapped in a moisture-impermeable bag, frozen and then stored at -20|C for 3 weeks. The products were prepared for consumption by heating in a conventional oven for 15 minutes at 200|C, thus giving a heated non-soggy pizza having an attractive, open bready texture upon consumption.

Example II

Sandwich

A bread dough was prepared by mixing

| | |
|---|---|
| Flour | 750g |
| Sugar | 15g |
| Yeast | 32g |
| Dough conditioner | 16g |
| Skimmed milk powder | 14g |
| Salt | 18g |
| Yolk powder | 45g |
| Gluten | 8g |
| Margarine | 70g |
| Water | 337g |
| Fat | 135g |

The dough obtained was proofed for 30 minutes at 37|C and subsequently formed into slabs having dimensions 100 x 100 x 2 mms. The product was baked in a bakery oven for 8 minutes at a temperature of 180|C. The resulting slabs were substantially flat and had a thickness of approximately 8 mms. Each of these these slabs was divided lengthwise into two similar bread slices having a thickness of 4 mms. A bechamel type filling was applied to one of these two bread slices on the crust side. The second of these two slices was combined with said first slice by contacting the crust side of said second slice with the filling, thus giving a sandwich-type food product. The edges of the product were sealed by pressure, and the product was frozen and then stored for 3 weeks at -20|C. The product was prepared for consumption by toasting under a pre-heated grill for approximately 10 minutes. The final product was non-soggy and had an attractive, open bready texture.

By way of comparison, slices of bread dough were prepared, baked and divided into pieces as described in Example II. A bechamel filling was applied to one of said pieces on the non-crust side, a second piece was combined with said first piece by contacting the non-crust side of said second slice with said filling, thus giving a sandwich-type food product. The product was sealed, frozen, stored and then prepared for comsumption such as described in Example II. The final product was soggy on the inside and the filling had been absorbed by the dough.

Example III

Baking under constraint

Dough composition;

4

| 'Bakers Pride' flour | 750g |
|---|---|
| Sugar | 15g |
| Puratos 500 | 16g |
| Skimmed milk powder | 14g |
| Salt | 18g |
| Yolk powder | 45g |
| Gluten | 8g |
| Apollo margarine | 70g |
| Yeast | 64g |
| Water | 390g |
| PO45 powdered fat | 135g |

The water, yeast and sugar are premixed to activate the yeast. The other ingredients (except the PO45) are added to the yeast solution, and mixed in a 'Hobart' mixer on 'speed 1' for 2 minutes. The PO45 is added to the dough towards the end of the mixing period. Samples of the dough were then rolled into 2mm sheets, and then subjected to different processes;

a) Proving then restraining whilst baking;

b) Restraining whilst proving and baking;

Proving times were 37|C at 75% relative humidity for 30 minutes, and baking was done in a conventional baking oven. The restraint was foil covered cardboard on top of the dough sheet.

Both dough pieces had a crusty lower surface, with softer upper surfaces, that produced by method (b) having a more open surface structure.

In a further improvement on the method, different types of constraint were investigated to decrease "skinning" of the constrained dough, i.e. to prevent the top surface of the dough drying out during proving.

Constraints tested were;

a) Foil covered cardboard (as before)

b) Metal baking tray

c) Silicon paper under the bottom surface of a metal baking tray to prevent sticking

The best result was obtained from sample b, which yielded a thin flexible sheet of dough with a crusty lower surface and a more open, aerated upper surface with little skinning. When water was sprayed on the upper surface of the dough to inhibit skinning, the samples tended to adhere to the restraining surfaces in places, with the dough surfaces subsequently peeling off, which again gave an open texture but in a less controlled manner.

## Claims

1. Process for preparing a food product comprising the steps of subjecting a piece of dough to treatment such that an outer crust is formed on only part of the piece and applying a filling on to the treated piece of dough such that the filling is in contact with at least part of the outer crust area but substantially not in contact with the outer non-crust area of the piece.

2. Process according to claim 1, characterised in that the piece of dough is divided into at least two parts and the filling is applied to at least one of the parts.

3. Process according to claim 1, characterised that the piece of dough is treated to form an outer crust, and that part of the outer crust surface is removed to provide a non-crust area and the filling is applied to at least part of the crust area which has not been so removed.

4. Process according to claim 1, characterised in that the piece of dough is treated whilst under constraint over at least part of its surface so as to inhibit the formation of an outer crust over that part of the surface whilst an outer crust develops over the remaining surface, and then applying a filling to at least part of the surface where the outer crust was developed.

5. Process according to any of claims 1-4, characterised in that the dough is a bread dough.

6. Process according to any of claims 1-5, characterised in that the piece of dough is a dough slice.

7. Process according to any of claims 1-6, characterised in that the treatment involves a heat treatment, preferably parbaking.

8. Process according to any of claims 1-7, characterised in that the filling is a moist filling.

9. Process according to any of claims 1-8, characterised in that two dough parts are combined with a filling to form a sandwich.

10. Food product comprising at least one piece of dough, each piece having an outer crust area and an outer non-crust area and a filling in contact with at least part of the crust area but substantially not in contact with the non-crust area.

11. Food product according to claim 10 comprising two pieces of dough and a filling sandwiched between these pieces.

Fig.1.

Fig.2.

Fig.3.

Fig.4.

Fig.5.

Fig.6.